# NEUE EUROPÄISCHE PATENTSCHRIFT

(11) **EP 2 001 713 B2**
(45) Veröffentlichungstag und Bekanntmachung des Hinweises auf die Entscheidung über den Einspruch: **10.02.2016**
(45) Hinweis auf die Patenterteilung: 06.01.2010
(21) Anmeldenummer: 07724236.0
(22) Anmeldetag: 03.04.2007
(51) Int. Cl.: B60R 21/205, B60R 21/215

(54) **INNENVERKLEIDUNGSTEIL ZUR ABDECKUNG EINES AIRBAGS UND VERFAHREN ZU DESSEN HERSTELLUNG**
INTERIOR PANELLING PART FOR COVERING AN AIRBAG AND METHOD FOR ITS PRODUCTION
PIECE D'HABILLAGE INTERIEUR POUR RECOUVRIR UN AIRBAG ET PROCEDE DE FABRICATION

(30) Priorität: 04.04.2006 DE 102006016724
(43) Veröffentlichungstag der Anmeldung: 17.12.2008
(73) Patentinhaber: Faurecia Innenraum Systeme GmbH, 76767 Hagenbach (DE); Moldware Konstruktion Produktentwicklung Design GmbH, 66606 St. Wendel (DE)
(72) Erfinder: BÜHLER, Wolfram, 76227 Karlsruhe (DE); SCHÄDEL, Wolf-Dieter, 66606 St. Wendel (DE); SCHWEIZER, Gordon, 76764 Rheinzabern (DE); KALKAN, Bülent, 76744 Wörth (DE); BAUER, Frank, 76829 Landau-Nussdorf (DE); GAVRILOV, Christo, 80636 München (DE)
(74) Vertreter: Pfenning, Meinig & Partner mbB
(86) Internationale Anmeldenummer: PCT/EP2007/003297
(87) Internationale Veröffentlichungsnummer: WO 2007/115835

(56) Entgegenhaltungen:
- EP-B1- 1 567 700
- WO-A-03/029055
- WO-A-2005/030537
- DE-A1- 3 843 686
- DE-A1- 10 122 312
- DE-A1- 10 141 846
- DE-A1- 10 147 547
- DE-A1- 10 203 407
- DE-A1- 10 358 896
- DE-A1- 19 730 837
- DE-A1- 19 831 462
- DE-U1- 20 015 135
- US-A- 5 382 047
- US-A- 5 382 047
- US-A- 5 431 435
- US-B1- 6 655 711

## Beschreibung

Die Erfindung betrifft ein Innenverkleidungsteil zur Abdeckung eines Airbags mit einem flächigen Träger, einer Dekorschicht und einer zwischen dem Träger und der Dekorschicht angeordneten Zwischenschicht nach dem Oberbegriff des Anspruchs 1.

Gattungsgemäße Innenverkleidungsteile, bei denen in dem Träger eine Durchtrittsöffnung für den Airbag ausgespart ist, wobei die Zwischenschicht eine die Durchtrittsöffnung überspannende und sich außerhalb der Durchtrittsöffnung mit dem Träger überlappende Matte umfasst, sind beispielsweise aus der Druckschrift DE 103 45 026 A1 bekannt. Diese Innenverkleidungsteile nach dem Stand der Technik sind typischerweise mit einer Schwächung der Zwischenschicht und/oder der Dekorschicht an drei Seiten der Durchtrittsöffnung versehen, so dass die Zwischenschicht und die Dekorschicht im Fall eines Airbagschusses längs eines Randes der Durchtrittsöffnung an diesen drei Seiten reißt und aufklappen kann, wobei die Matte die Funktion eines Scharnieres übernimmt. Insbesondere, wenn ein solches Innenverkleidungsteil zur Abdeckung eines Beifahrerairbags hinter einer Windschutzscheibe angeordnet ist, ergibt sich bei Ausführungen nach dem Stand der Technik das Problem, dass ein aufklappender Teil des Innenverkleidungsteils mit großer Wucht an die Windschutzscheibe schlägt und diese beschädigt, was wiederum unnötig hohe Schäden und einen gefährlichen Partikelflug mit sich bringt.

Der vorliegenden Erfindung liegt also die Aufgabe zugrunde, ein entsprechendes Innenverkleidungsteil zur Abdeckung eines Airbags zu entwickeln, mit dem der geschilderte Nachteil vermieden wird, mit dem sich also verhindern lässt, dass eine bei einem Airbagschuss frei werdende Energie zu einer Zerstörung oder Beschädigung der Windschutzscheibe oder einer anderen in einer Umgebung des Innenverkleidungsteils angeordneten Fensterscheibe führt.

Diese Aufgabe wird erfindungsgemäß gelöst durch ein Innenverkleidungsteil mit den kennzeichnenden Merkmalen des Anspruchs 1 in Verbindung mit den Merkmalen des Oberbegriffs des Anspruchs 1. Vorteilhafte Ausgestaltungen und Weiterentwicklungen ergeben sich mit den Merkmalen der Unteransprüche.

Dadurch, dass die Zwischenschicht und/oder die Dekorschicht erfindungsgemäß an genau einer Seite der Durchtrittsöffnung längs oder parallel versetzt eines Randes der Durchtrittsöffnung geschwächt ist, wird erreicht, dass ein aus der Zwischenschicht mit der Matte und der Dekorschicht gebildeter, den Airbag abdeckender Teil des Innenverkleidungsteils bei einer Airbagauslösung nicht vollständig aufklappt, sondern sich taschenartig oder fischmaulartig öffnet und dabei eine Öffnung freigibt, aus der heraus sich der Airbag entfalten kann, wobei der Airbag durch den genannten Teil des Innenverkleidungsteils geführt wird. Dadurch wird es insbesondere möglich, eine Öffnungsbewegung des Airbags so zu führen und gegebenenfalls eine Bewegungsrichtung des Airbags umzuleiten, dass ein Kontakt einer durch den genannten Teil des Innenverkleidungsteils gebildeten Airbagabdeckung oder des Airbags selbst mit einer in unmittelbarer Nähe angeordneten Fensterscheibe verhindert oder so gebremst wird, dass eine Beschädigung der Fensterscheibe vermieden wird. Die taschenartige oder fischmaulartige Öffnung der Airbagabdeckung wird dabei dadurch sichergestellt, dass sowohl die Zwischenschicht als auch die Dekorschicht an einer der genannten Seite der Durchtrittsöffnung gegenüberliegenden Seite sowie an zwei weiteren, einander gegenüberliegenden Seiten nicht geschwächt ist. Der Rand der Durchtrittsöffnung, längs dessen die Zwischenschicht und/oder die Dekorschicht an genau einer Seite der Durchtrittsöffnung geschwächt ist, hat dort bei typischen Ausführungen der Erfindung einen geraden oder im Wesentlichen geraden Verlauf.

Eine typische Anordnung eines Innenverkleidungsteils der hier vorgeschlagenen Art sieht vor, dass die Seite der Durchtrittsöffnung, an der die Zwischenschicht und/oder die Dekorschicht geschwächt ist, einer Windschutzscheibe oder einer anderen in unmittelbarer Nähe zur Durchtrittsöffnung gelegenen Fensterscheibe eines Fahrzeugs abgewandt ist. Bei dem Innenverkleidungsteil kann es sich insbesondere um eine Instrumententafel oder einen Teil einer Instrumententafel handeln. Bei dem durch das Innenverkleidungsteil abgedeckten Airbag handelt es sich typischerweise um einen Beifahrerairbag. Alternativ kann es sich beispielsweise auch um ein Innenverkleidungsteil handeln, dass einen Knieairbag oder Türseitenairbag abdeckt.

Um zu erreichen, dass ein Rand der Airbagabdeckung nur an der geschwächten Seite aufreißt, damit das Innenverkleidungsteil in beschriebener Weise eine Führung oder Umleitung des sich öffnendes Airbags bewirken kann, kann die Matte außerhalb der Durchtrittsöffnung an einer der Seite mit der Schwächung gegenüberliegenden Seite und/oder an zwei weiteren, einander gegenüberliegenden Seiten der Durchtrittsöffnung am Träger befestigt sein, beispielsweise durch eine Schraub-, Niet- oder Klebeverbindung, oder Ultraschallverschweißung. Eine bevorzugte Ausführung der Erfindung sieht dementsprechend vor, dass die Matte jeweils längs einer zu einer Berandung der Durchtrittsöffnung an der jeweiligen Seite parallelen Strecke mit dem Träger verbunden, beispielsweise an den Träger angeschraubt, angenietet oder angeklebt ist.

An den Seiten der Durchtrittsöffnung, an denen keine Schwächung vorgesehen ist, ist die Zwischenschicht und die Dekorschicht im Fall einer Airbagauslösung hohen Belastungen ausgesetzt. Um eine für diese Belastungen hinreichend hohe Belastbarkeit der Airbagabdeckung zu gewährleisten, kann die Matte mit solchen Abmessungen ausgelegt werden, dass sie dort, wo die Zwischenschicht und die Dekorschicht längs des Randes der Durchtrittsöffnung nicht geschwächt ist, einen mindestens 1 cm breiten, besonders vorzugsweise einen mindestens 2 cm breiten, besonders vorzugsweise einen mindestens 5 cm breiten, parallel zum Rand der Durchtrittsöffnung verlaufenden Streifen des Trägers überdeckt. Wenn dieser Streifen, der einen Überlappungsbereich der Matte mit dem Träger bildet, hinreichend breit ist, kann unter Umständen auch auf eine gesonderte Befestigung der Matte am Träger verzichtet werden.

Eine bevorzugte Ausführung der Erfindung sieht vor, dass die Zwischenschicht ein die Dekorschicht mit dem Träger verbindendes geschäumtes Material umfasst, in das die Matte eingelegt ist, bei dem es sich wieder um besonders vorzugsweise um einen Polyurethanschaum handelt. Erreicht werden kann dadurch sowohl ein hoher Gestaltungsspielraum betreffend Form und haptische Eigenschaften einer Schaumseite des Innenverkleidungsteils und eine Bildung eines in vorteilhafter Weise flexiblen und belastungsfähigen Verbundes aus Dekorschicht und Zwischenschicht, der die Airbagabdeckung bildet. Vorteilhafterweise kann die Matte dazu zumindest teilweise, vorzugsweise vollständig von dem geschäumten Material durchdrungen sein.

Damit eine taschen- oder fischmaulartige Öffnung der Airbagabdeckung und dadurch eine Führung und gegebenenfalls Umlenkung des sich öffnenden Airbags bei einer weitestgehenden Vermeidung von unerwünschtem Partikelflug möglich wird, sollte ein aus der Dekorschicht und der Zwischenschicht mit der Matte gebildeter, die Airbagabdeckung bildender Verbund möglichst flexibel, dehnbar und zugbelastbar sein. Um das zu erreichen, können insbesondere nachfolgend aufgezählte Merkmale realisiert sein.

Die Matte kann vorteilhafter Weise aus Polyester, Polyamid oder anderen synthetischen oder natürlichen Fasermaterialien gefertigt sein. Auch andere Materialen mit einer Bruchdehnung (nachfolgend auch Dehnbarkeit genannt) von mindestens 40 %, vorzugsweise mit einer Bruchdehnung von mindesten 200 % können verwendet werden. Die Matte kann dabei vorzugsweise mit einer Stärke ausgelegt werden, die zu einer Zugfestigkeit von mindestens 1 MPa, vorzugsweise zu einer Zugfestigkeit von zwischen 1 MPa und 5 MPa führt. Um eine hinreichend hohe Dehnbarkeit zu erreichen und gleichzeitig für eine Führung des Airbags erforderliche Kräfte durch die Matte übertragen zu können, sollte ein die Matte bildendes Material ein Elastizitätsmodul von zwischen 1 MPa und 5 MPa haben.

Auch die Dekorschicht sollte möglichst flexibel und belastbar ausgeführt sein, wobei zugleich eine ästhetische Gestaltung der Dekorschicht möglich sein soll. Das kann erreicht werden durch eine Fertigung der Dekorschicht aus einem PVC, TPU, TPO, Leder und/oder Kunstleder enthaltenden Material. Auch die Dekorschicht kann durch eine entsprechende Materialauswahl bei bevorzugten Ausführungen der Erfindung eine Dehnbarkeit von mindestens 250 %, vorzugsweise eine Dehnbarkeit von mindestens 300 % haben. Ein die Dekorschicht bildendes Material sollte wiederum mit Blick auf eine hohe Dehnbarkeit und Belastbarkeit ein Elastizitätsmodul von vorzugsweise zwischen 5 MPa und 15 MPa haben. Damit die Dekorschicht einen angemessenen Teil einer bei einem Airbagschuss von der Airbagabdeckung zu übertragenden Zugkraft übernehmen kann, kann die Dekorschicht mit einer Stärke ausgeführt werden, die zu einer Zugfestigkeit der Dekorschicht von mindestens 5 MPa, vorzugsweise zu einer Zugfestigkeit der Dekorschicht von zwischen 5 MPa und 15 MPa führt.

Insbesondere kann die Matte eine Dicke von zwischen 2 mm und 10 mm und/oder die Dekorschicht eine Dicke von zwischen 0,1 mm und 2,5 mm haben, damit eine günstige Dehnbarkeit und Belastbarkeit der Airbagabdeckung erreicht wird.

Bei bevorzugten Ausführungen der Erfindung bildet die Dekorschicht mit der Zwischenschicht einen Verbund, der eine Dehnbarkeit von mindestens 40 %, vorzugsweise eine Dehnbarkeit von mindestens 150 %, und/oder eine Zugfestigkeit von mindestens 2 MPa, vorzugsweise eine Zugfestigkeit von mindestens 2 MPa und 15 MPa hat. Bevorzugt liegt das E-Modul im Bereich von 10 und 70 MPa, die Dicke des Verbundes im Bereich von 3 mm und 15 mm.

Um eine leichtere Herstellung des Innenverkleidungsteils zu erlauben, kann die Matte mit einer Abdichtungslage, vorzugsweise einer Folie hinterlegt sein, welche auf dem Träger aufliegt und dort angeklebt sein kann und die Durchtrittsöffnung im Träger abdeckt.

Ein vorteilhaftes Verfahren zur Herstellung eines Innenverkleidungsteils beschriebener Art sieht vor, dass die Dekorschicht und der Träger in einem Hinterschäumwerkzeug angeordnet wird und die Matte so mit einer ihr hinterlegten Abdichtungslage in einen Hohlraum zwischen der Dekorschicht und dem Träger eingebracht wird, dass die Durchtrittsöffnung abgedeckt wird, wonach der Hohlraum durch Hinterschäumen der Dekorschicht gefüllt wird. Es kann vorgesehen sein, dass die Zwischenschicht und/oder die Dekorschicht anschließend an genau einer Seite der Durchtrittsöffnung mit einer längs des Randes der Durchtrittsöffnung verlaufenden Schwächung versehen wird.

Eine erfindungsgemäß vorgesehene Schwächung der Zwischenschicht kann sich unter Umständen aber bereits dadurch ergeben, dass die Matte an der entsprechenden Seite der Durchtrittsöffnung am Rand der Durchtrittsöffnung endet und dort selbst eine parallel zum Rand der Durchtrittsöffnung verlaufende Berandung hat. Alternativ kann die Matte an der entsprechenden Seite der Durchtrittsöffnung längs des Randes der Durchtrittsöffnung durchbrochen ausgeführt sein. In jedem Fall sollte die Schwächung der Zwischenschicht und/oder der Dekorschicht so ausgelegt sein, dass das Innenverkleidungsteil an genau einer Seite der Durchtrittsöffnung eine Soll-Aufreißlinie aufweist, wogegen sämtliche Schichten des Innenverkleidungsteils an allen übrigen Seiten und insbesondere an zwei einander gegenüberliegenden, der geschwächten Seite angrenzenden Seiten so stabil sind, dass dort ein Einreißen auch bei den mit einer Airbagauslösung verbundenen Kräften verhindert wird. Um ein unerwünschtes zusätzliches seitliches Einreißen der Airbagabdeckung zu verhindern, kann die durch die Schwächung gebildete Soll-Aufreißlinie auch zu zwei Enden hin einen von der Durchtrittsöffnung weggebogenen Verlauf haben.

Ein Ausführungsbeispiel der Erfindung wird nachfolgend anhand der Figuren 1 bis 3 beschrieben. Es zeigt
- Figur 1: eine Aufsicht auf ein erfindungs- gemäßes Innenverkleidungsteil unter Weglassung einer Dekor- schicht,
- Figur 2: einen Längsschnitt durch dasselbe Innenverkleidungsteil und
- Figur 3: einen Querschnitt dieses Innen- verkleidungsteils.

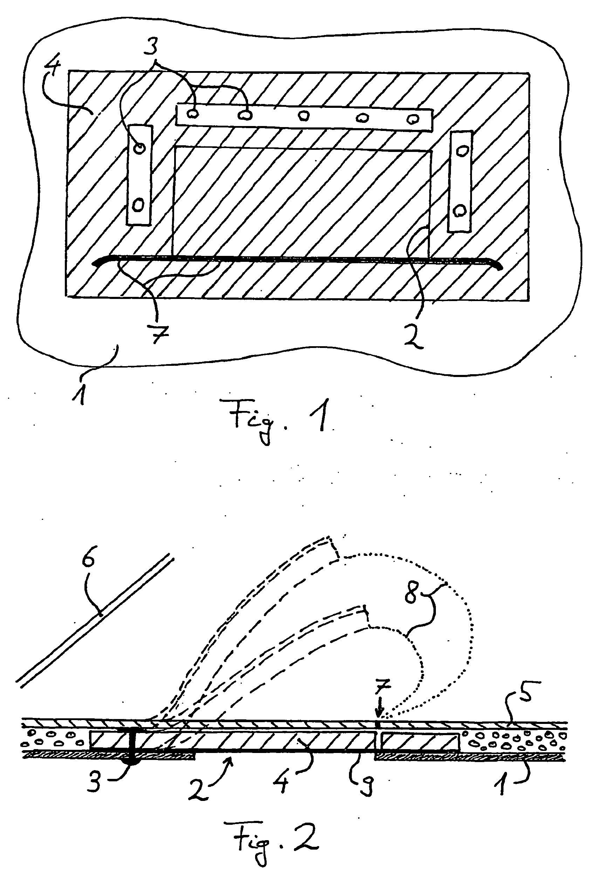

Bei dem in der Figur 1 dargestellten Innenverkleidungsteil handelt es sich um eine Instrumententafel, wobei ein abgebildeter Teil dieser Instrumententafel zur Abdeckung eines Beifahrerairbags dienen soll. Alternativ wäre beispielsweise auch ein Innenverkleidungsteil möglich, welches einen Knieairbag oder Türseitenairbag abdeckt. Das Innenverkleidungsteil weist einen flächigen Träger 1 auf, der aus einem faserverstärktem polypropylenhaltigen Kunststoff gefertigt ist. Grundsätzlich kann der Träger auch aus anderen Materialien bestehen, insbesondere aus einem unverstärktem oder mit natürlichen oder synthetischen Füllstoffen verstärktem Kunststoff wie PP, PL/ABS oder SMA. Dieser Träger 1 weist eine im vorliegenden Beispiel rechteckige Durchtrittsöffnung 2 für den Beifahrerairbag auf. Auf dem Träger ist eine die Durchtrittsöffnung 2 abdeckende und mit Nieten 3 am Träger 1 befestigte Matte 4 angeordnet, die sich außerhalb der Durchtrittsöffnung 2 mit dem Träger 1 überlappt. Diese Matte 4 ist aus einem in einem die Matte 4 vollständig durchdringenden Polyurethanschaum eingelegt, mit dem sie eine Zwischenschicht des Innenverkleidungsteils bildet. Die Matte 4 ist aus einem Fasermaterial aus Polyester, hier in Form eines Gewirkes, gefertigt und hat eine Dicke von etwa 6 mm. Dabei hat die Matte 4 ein Elastizitätsmodul längs von etwa 2 MPa und quer von etwa 1 MPa, eine Bruchdehnung längs von etwa 220 % und quer von etwa 50 % und eine Zugfestigkeit längs von etwa 4,2 MPa und quer von etwa 1,4 MPa. Alternativ kann die Matte auch ais anderen Materialien, insbesondere aus synthetischen oder natürlichen Fasermaterialien, insbesondere aus Polyamid, gefertigt sein.

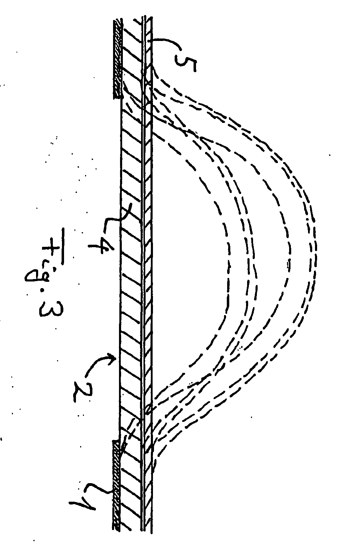

Oberhalb der durch die Matte 4 und den Polyurethanschaum gebildeten Zwischenschicht ist eine nur in den Figuren 2 und 3 dargestellte Dekorschicht 5 einer Dicke von etwa 1 mm angeordnet. Diese Dekorschicht 5 ist aus PVC gefertigt, hat eine Zugfestigkeit von etwa 11 MPa und eine Dehnbarkeit von etwa 300 %. Dabei hat die Dekorschicht 5 ein Elastizitätsmodul von etwa 14 MPa. In einem durch die Matte 4 abgedeckten Bereich bildet die Zwischenschicht mit der Dekorschicht 5 so einen Verbund, der eine Dehnbarkeit quer und längs von etwa 300 % und eine Zugfestigkeit längs von etwa 5 MPa und quer von etwa 2,3 MPa sowie ein E-Modul von längs 45 MPa und quer etwa 15 MPa hat. Die Dichte des Verbundes ist etwa 250 g/l. Dies liegt im Wesentlichen daran, dass als Matte 4 ein Gewirke verwendet wird. Damit ist es insbesondere möglich, auch eine leichte Airbagklappe zu realisieren. Grundsätzlich bieten sich somit für die erfindungsgemäße Matte neben einem Gewirke auch Gewebe, unter Umständen auch Vliese, aus Fasermaterialien an. Hiermit kann die notwendige Festigkeit bei vorteilhafter geringer Dichte und damit verbunden geringem Gewicht erreicht werden.

In der Figur 2 ist eine Windschutzscheibe 6 erkennbar, hinter der das Innenverkleidungsteil angeordnet ist. An einer der Windschutzscheibe 6 abgewandten Seite der Durchtrittsöffnung 2 und nur dort ist die Zwischenschicht mit der Matte 4 und die Dekorschicht 5 längs eines Randes der Durchtrittsöffnung 2 mit einer Schwächung 7 versehen, die durch eine Materialdickenreduzierung der Dekorschicht 5 und durch eine Durchbrechung der Matte 4 realisiert ist. Alternativ könnte ein Schwächung der Zwischenschicht auch dadurch realisiert sein, dass die Matte 4 an dieser Seite der Durchtrittsöffnung 2 nur bis zum Rand der Durchtrittsöffnung 2 reicht. Alternativ ist auch eine Ausführung ohne Schwächung der Dekorschicht möglich.

Im abgebildeten Beispiel ragt die Schwächung 7, wie in der Figur 1 zu erkennen ist, seitlich etwas über die Durchtrittsöffnung 2 hinaus und ist dort leicht von der Durchtrittsöffnung 2 weg gekrümmt. Entscheidend ist, dass die Zwischenschicht und die Dekorschicht 5 an drei verbleiben Seiten der Durchtrittsöffnung 2, also an einer der Windschutzscheibe 6 zugewandten, der Schwächung 7 gegenüberliegenden Seite der Durchtrittsöffnung 2 und seitlich an zwei einander gegenüberliegenden Seiten der Durchtrittsöffnung 2, nicht geschwächt ist. Dadurch, dass die Matte 4 dort jeweils längs einer zu einer Brandung der Durchtrittsöffnung 2 parallelen Strecke durch die Nieten 3 mit dem Träger 1 verbunden ist, wird so gewährleistet, dass eine durch die Dekorschicht 5 und die Zwischenschicht mit der Matte 4 gebildete Airbagabdeckung nur an der der Windschutzscheibe 6 gegenüberliegenden Seite längs der Schwächung 7 aufreißt, nicht aber an der der Windschutzscheibe 6 zugewandten Seite und seitlich an den an die Schwächung 7 angrenzenden Seiten. Auch das erwähnte Merkmal, nach dem die Schwächung 7 seitlich der Durchtrittsöffnung 2 einen leicht gekrümmten Verlauf hat, trägt dazu bei, ein seitliches Einreißen zu verhindern. Anstelle einer Verbindung der Matte 4 mit dem Träger 1 durch die Nieten 3 könnte auch eine entsprechende Schraubverbindung oder alternativ oder zusätzlich eine Klebeverbindung oder Ultraschallverschweißung der Matte 4 mit dem Träger 1 vorgesehen sein. An den drei Seiten der Durchtrittsöffnung 2, an denen die Zwischenschicht und die Dekorschicht 5 nicht geschwächt ist, überlappt sich die Matte 4 mit dem Träger 1 soweit, dass sie einen zwischen 1 bis 10 cm breiten, parallel zur Berandung der Durchtrittsöffnung 2 verlaufenden Streifen auf den Träger 1 überdeckt. Alternativ könnte auch vorgesehen sein, dass die Matte 4 den Träger 1 vollflächig abdeckt. Unter Umständen könnte dann auch auf eine gesonderte Befestigung der Matte 4 auf dem Träger 1 verzichtet werden.

Durch die geschilderten Merkmale wird nun erreicht, dass sich die Airbagabdeckung, die durch einen die Durchtrittsöffnung 2 abdeckenden Teil der Dekorschicht 5 und der Zwischenschicht mit der Matte 4 gebildet ist, in einer in den Figuren 2 und 3 veranschaulichten Weise taschenartig oder fischmaulartig öffnet und einen in der Figur 2 angedeuteten Airbag 8 dabei führt und eine Entfaltungsbewegung des Airbags 8 von der Windschutzscheibe 6 weg in Richtung eines Fahrzeuginnenraums umleitet. Figur 3 zeigt dabei einen Blick in Fahrtrichtung auf einen Querschnitt des Innenverkleidungsteils, Figur 2 einen dazu senkrechten Längsschnitt des selben Innenverkleidungsteils. Ein Kontakt der Airbagabdeckung selbst oder des Airbags 8 mit der Windschutzscheibe 6, durch welche diese zerstört werden könnte, wird dadurch vermieden.

Wenn das beschriebene Innenverkleidungsteil mit einer Airbagvorrichtung kombiniert wird, die abhängig von detektierten Unfallparametern unterschiedliche Füllmengen des Airbags 8 vorsieht, öffnet sich die Airbagabdeckung, wie in den Figuren 2 und 3 durch zwei verschiedene, gestrichelt dargestellte Konfigurationen angedeutet ist, unterschiedlich weit und absorbiert dementsprechend unterschiedliche Energiebeträge eines entsprechenden Öffnungsstoßes.

Ein Verfahren zur Herstellung des anhand durch die Figuren 1 bis 3 beschriebenen Innenverkleidungsteils sieht vor, dass zunächst die Dekorschicht 5 und der Träger 1 so in einem Hinterschäumwerkzeug angeordnet wird, dass zwischen der Dekorschicht 5 und dem Träger 1 ein Hohlraum verbleibt, wobei die Matte 4 mit einer ihr hinterlegten, in der Figur 2 angedeuteten Abdichtungslage 9 (einer Folie) in den Hohlraum zwischen der Dekorschicht 5 und dem Träger 1 eingebracht wird, so dass die Durchtrittsöffnung 2 abgedeckt und durch die Abdichtungslage 9 abgedichtet wird. Anschließend wird der Hohlraum durch Hinterschäumen der Dekorschicht 5 mit einem Polyurethanschaum gefüllt. Schließlich wird die Zwischenschicht und die Dekorschicht 5 rückseitig mit der Schwächung 7 versehen. Es kann auch vorgesehen sein, dass die Matte 4 bereits vor dem Hinterschäumen der Dekorschicht 5 mit der durch eine Durchbrechung der Matte 4 gegebenen Schwächung 7 versehen wird. Alternativ kann der komplette Verbund nach dem Schäumen geschwächt, beispielsweise mit einem Laser, werden. Auch ist eine Ausführung ohne Dekorschwächung möglich.

Bevorzugte Ausführungen der hier beschriebenen Erfindung sehen vor, dass die Zwischenschicht und/oder die Dekorschicht an der genannten genau einen Seite der Durchtrittsöffnung so längs des Randes der Durchtrittsöffnung geschwächt ist, dass eine Schwächungslinie in der Zwischenschicht und/oder in der Dekorschicht dort mit dem Rand in Deckung liegt. Die Schwächungslinie kann aber selbstverständlich auch leicht parallel zu diesem Rand versetzt verlaufen, ohne dass die gewünschte Wirkung einer, wie in den Figuren gezeigt, taschenartigen oder fischmaulartigen Öffnung beeinträchtigt wird. Das gilt insbesondere dann, wenn die Schwächungslinie außerhalb der Durchtrittsöffnung verläuft, wenn die Schwächungslinie also gegenüber dem genannten Rand in Richtung von der Durchtrittsöffnung weg versetzt ist. Ein paralleler Versatz zwischen dem Rand und der Schwächungslinie sollte dabei aber möglichst nicht mehr als etwa 4 cm, vorzugsweise nicht mehr als 2 cm, betragen. Schließlich ist es auch denkbar, dass die Schwächungslinie einen leicht variierenden Abstand zum Rand der Durchtrittsöffnung hat, also nicht exakt parallel zu dieser verläuft.

## Patentansprüche

1. Innenverkleidungsteil zur Abdeckung eines Airbags (8), das einen flächigen Träger (1), eine Dekorschicht (5) und eine zwischen dem Träger (1) und der Dekorschicht (5) angeordnete Zwischenschicht aufweist, wobei in dem Träger (1) eine Durchtrittsöffnung (2) für den Airbag (8) ausgespart ist und wobei die Zwischenschicht eine die Durchtrittsöffnung (2) überspannende und sich außerhalb der Durchtrittsöffnung (2) mit dem Träger (1) überlappende Matte (4) umfasst,
**dadurch gekennzeichnet,**
**dass** die Zwischenschicht und/oder die Dekorschicht (5) an einer und nur einer Seite der Durchtrittsöffnung (2) längs eines Randes der Durchtrittsöffnung (2) oder längs einer außerhalb der Durchtrittsöffnung (2) zu diesem Rand parallel versetzten Schwächungslinie geschwächt ist, während sowohl die Zwischenschicht als auch die Dekorschicht (5) an einer der genannten Seite der Durchtrittsöffnung (2) gegenüberliegenden Seite sowie an zwei weiteren, einander gegenüberliegenden Seiten nicht geschwächt ist, zur Ausbildung einer taschenartigen oder fischmaulartigen Öffnung durch einen aus der Zwischenschicht mit der Matte (4) und der Dekorschicht (5) gebildeten, den Airbag (8) abdeckenden Teil des Innenverkleidungsteils bei einer Airbagauslösung, aus der heraus sich der Airbag (8) entfalten kann, wobei der Airbag (8) durch den genannten Teil des Innenverkleidungsteils geführt wird.

2. Innenverkleidungsteil nach Anspruch 1, **dadurch gekennzeichnet, dass** die erstgenannte Seite einer der Durchtrittsöffnung (2) nächstgelegenen Fensterscheibe abgewandt ist.

3. Innenverkleidungsteil nach einem der Ansprüche 1 oder 2, **dadurch gekennzeichnet, dass** die Matte (4) außerhalb der Durchtrittsöffnung an der der erstgenannten Seite gegenüberliegenden Seite der Durchtrittsöffnung und/oder an den zwei weiteren, einander gegenüberliegenden Seiten der Durchtrittsöffnung (2) am Träger (1) befestigt ist.

4. Innenverkleidungsteil nach einem der Ansprüche 1 bis 3, **dadurch gekennzeichnet, dass** die Zwischenschicht ein die Dekorschicht (5) mit dem Träger (1) verbindendes geschäumtes Material umfasst, in das die Matte (4) eingelegt ist.

5. Innenverkleidungsteil nach einem der Ansprüche 1 bis 4, **dadurch gekennzeichnet, dass** die Matte (4) aus Polyester, Polyamid oder andere synthetische oder natürliche Fasermaterialien gefertigt ist.

6. Innenverkleidungsteil nach einem der Ansprüche 1 bis 5, **dadurch gekennzeichnet, dass** die Matte (4) eine Zugfestigkeit von mindestens 1 MPa und/oder eine Bruchdehnung von mindestens 40 % hat.

7. Innenverkleidungsteil nach einem der Ansprüche 1 bis 6, **dadurch gekennzeichnet, dass** ein die Matte (4) bildendes Material ein Elastizitätsmodul von zwischen 1 MPa und 5 MPa hat.

8. Innenverkleidungsteil nach einem der Ansprüche 1 bis 7, **dadurch gekennzeichnet, dass** die Dekorschicht (5) PVC, TPU, TPO, Leder und/oder Kunstleder enthält.

9. Innenverkleidungsteil nach einem der Ansprüche 1 bis 8, **dadurch gekennzeichnet, dass** die Dekorschicht (5) eine Zugfestigkeit von mindestens 5 MPa und/oder eine Dehnbarkeit von mindestens 250 % hat.

10. Innenverkleidungsteil nach einem der Ansprüche 1 bis 9, **dadurch gekennzeichnet, dass** ein die Dekorschicht (5) bildendes Material ein Elastizitätsmodul von zwischen 5 MPa und 15 MPa hat.

11. Innenverkleidungsteil nach einem der Ansprüche 1 bis 10, **dadurch gekennzeichnet, dass** die Matte (4) eine Dicke von zwischen 2 mm und 10 mm und/oder die Dekorschicht (5) eine Dicke von zwischen 0,1 mm und 2,5 mm hat.

12. Innenverkleidungsteil nach einem der Ansprüche 1 bis 11, **dadurch gekennzeichnet, dass** die Dekorschicht (5) mit der Zwischenschicht einen Verbund bildet, der eine Dehnbarkeit von mindestens 40 % hat.

13. Innenverkleidungsteil nach einem der Ansprüche 1 bis 12, **dadurch gekennzeichnet, dass** die Dekorschicht (5) mit der Zwischenschicht einen Verbund bildet, der eine Zugfestigkeit von mindestens 2 MPa hat.

## Claims

1. Interior panelling part for covering an airbag (8) which has a flat support (1), a decorative layer (5) and an intermediate layer which is disposed between the support (1) and the decorative layer (5), a passage opening (2) for the airbag (8) being left open in the support (1) and the intermediate layer comprising a mat (4) which spans the passage opening (2) and overlaps with the support (1) outwith the passage opening (2),
**characterised in that**
the intermediate layer and/or the decorative layer (5) is weakened at one and only one side of the passage opening (2) along an edge of the passage opening (2) or along a weakening line offset parallel to said edge out with the passage opening (2), while the intermediate layer as well as the decorative layer (5) are not weakened at a side of the passage opening (2) which is situated opposite the mentioned side and at two further oppositely situated sides, for forming, in the event of an airbag opening, a bag-like or fishmouth-like opening by a portion of the interior panelling part covering the airbag, said portion being composed of the intermediate layer with the mat (4) and the decorative layer (5), the airbag (8) being able to unfold out of said bag-like or fishmouth-like opening while the airbag (8) is guided by said portion of the interior panelling part.

2. Interior panelling part according to claim 1, **characterised in that** the first mentioned side of the passage opening (2) is orientated away from the nearest located window.

3. Interior panelling part according to one of the claims 1 or 2, **characterised in that** the mat (4) is mounted out with the passage opening on the side of the passage opening which is situated opposite the first mentioned side and/or on the two further oppositely situated sides of the passage opening (2) on the support (1).

4. Interior panelling part according to one of the claims 1 to 3, **characterised in that** the intermediate layer comprises a foamed material which connects the decorative layer (5) to the support (1) and into which the mat (4) is inserted.

5. Interior panelling part according to one of the claims 1 to 4, **characterised in that** the mat (4) is manufactured from polyester, polyamide or other synthetic or natural fibre materials.

6. Interior panelling part according to one of the claims 1 to 5, **characterised in that** the mat (4) has a tensile strength of at least 1 MPa and/or a breaking elongation of at least 40%.

7. Interior panelling part according to one of the claims 1 to 6, **characterised in that** a material which forms the mat (4) has a modulus of elasticity of between 1 MPa and 5 MPa.

8. Interior panelling part according to one of the claims 1 to 7, **characterised in that** the decorative layer (5) contains PVC, TPU, TPO, leather and/or synthetic leather.

9. Interior panelling part according to one of the claims 1 to 8, **characterised in that** the decorative layer (5) has a tensile strength of at least 5 MPa and/or an extensibility of at least 250%.

10. Interior panelling part according to one of the claims 1 to 9, **characterised in that** a material which forms the decorative layer (5) has a modulus of elasticity of between 5 MPa and 15 MPa.

11. Interior panelling part according to one of the claims 1 to 10, **characterised in that** the mat (4) has a thickness of between 2 mm and 10 mm and/or the decorative layer (5) a thickness of between 0.1 mm and 2.5 mm.

12. Interior panelling part according to one of the claims 1 to 11, **characterised in that** the decorative layer (5) with the intermediate layer forms a composite which has an extensibility of at least 40%.

13. Interior panelling part according to one of the claims 1 to 12, **characterised in that** the decorative layer (5) with the intermediate layer forms a composite which has a tensile strength of at least 2 MPa.

## Revendications

1. Pièce d'habillage intérieur destinée à recouvrir un airbag (8), qui comporte un support plat (1), une couche décorative (5) et une couche intermédiaire disposée entre le support (1) et la couche décorative (5), une ouverture de passage (2) pour l'airbag (8) étant ménagée dans le support (1), et la couche intermédiaire comprenant une natte (4) qui recouvre l'ouverture de passage (2) et qui est chevauchante, à l'extérieur de l'ouverture de passage (2), avec le support (1),
**caractérisée en ce que**
la couche intermédiaire et/ou la couche décorative (5) est/sont affaiblie(s) sur un seul et unique côté de l'ouverture de passage (2) le long d'un bord de l'ouverture de passage (2) ou le long d'une ligne d'affaiblissement décalée parallèlement par rapport à ce bord à l'extérieur de l'ouverture de passage (2), tandis que la couche intermédiaire ainsi que la couche décorative (5) n'est/ ne sont pas affaiblie(s) au niveau d'un côté opposé au côté mentionné de l'ouverture de passage (2) ainsi qu'au niveau de deux autres côtés opposés entre eux, afin de former, lors d'un déclenchement de l'airbag, une ouverture en forme de poche ou de gueule de poisson à travers une partie de la pièce d'habillage intérieur recouvrant l'airbag (8), constituée de la couche intermédiaire avec la natte (4) et la couche décorative (5), hors de laquelle l'airbag (8) peut se déployer, l'airbag (8) étant guidé par la partie mentionnée de la pièce d'habillage intérieur.

2. Pièce d'habillage intérieur selon la revendication 1, **caractérisée en ce que** le premier côté mentionné est opposé à une vitre de fenêtre la plus proche de l'ouverture de passage (2).

3. Pièce d'habillage intérieur selon l'une des revendications 1 ou 2, **caractérisée en ce que** la natte (4) est fixée à l'extérieur de l'ouverture de passage au niveau du côté opposé au premier côté mentionné de l'ouverture de passage et/ou au niveau de deux autres côtés, opposés entre eux, de l'ouverture de passage (2), sur le support (1).

4. Pièce d'habillage intérieur selon l'une des revendications 1 à 3, **caractérisée en ce que** la couche intermédiaire comprend un matériau moussé reliant la couche décorative (5) avec le support (1), dans lequel la natte (4) est intégrée.

5. Pièce d'habillage intérieur selon l'une des revendications 1 à 4, **caractérisée en ce que** la natte (4) est constituée de polyester, de polyamide ou d'autres matériaux fibreux synthétiques ou naturels.

6. Pièce d'habillage intérieur selon l'une des revendications 1 à 5, **caractérisée en ce que** la natte (4) présente une résistance à la traction d'au moins 1 MPa et/ou un allongement à la rupture d'au moins 40%.

7. Pièce d'habillage intérieur selon l'une des revendications 1 à 6, **caractérisée en ce qu'**un matériau constituant la natte (4) présente un module d'élasticité entre 1 MPa et 5 MPa.

8. Pièce d'habillage intérieur selon l'une des revendications 1 à 7, **caractérisée en ce que** la couche décorative (5) contient du PVC, du TPU, du TPO, du cuir et/ou du cuir synthétique.

9. Pièce d'habillage intérieur selon l'une des revendications 1 à 8, **caractérisée en ce que** la couche décorative (5) présente une résistance à la traction d'au moins 5 MPa et/ou une extensibilité d'au moins 250%.

10. Pièce d'habillage intérieur selon l'une des revendications 1 à 9, **caractérisée en ce qu'**un matériau constituant la couche décorative (5) présente un module d'élasticité entre 5 MPa et 15 MPa.

11. Pièce d'habillage intérieur selon l'une des revendications 1 à 10, **caractérisée en ce que** la natte (4) présente une épaisseur entre 2 mm et 10 mm et/ou la couche décorative (5) présente une épaisseur entre 0,1 mm et 2,5 mm.

12. Pièce d'habillage intérieur selon l'une des revendications 1 à 11, **caractérisée en ce que** la couche décorative (5) forme avec la couche intermédiaire un composite qui présente une extensibilité d'au moins 40%.

13. Pièce d'habillage intérieur selon l'une des revendications 1 à 12, **caractérisée en ce que** la couche décorative (5) forme avec la couche intermédiaire un composite qui présente une résistance à la traction d'au moins 2 MPa.
